# EUROPÄISCHE PATENTSCHRIFT

(11) **EP 4 631 176 B1**
(45) Veröffentlichungstag und Bekanntmachung des Hinweises auf die Patenterteilung: **02.12.2026**
(21) Anmeldenummer: 23838057.0
(22) Anmeldetag: 21.12.2023
(51) Int. Cl.: H04B 7/04, H04B 7/06

(54) **DRAHTLOSES KOMMUNIKATIONSSYSTEM**
WIRELESS COMMUNICATION SYSTEM
SYSTÈME DE COMMUNICATION SANS FIL

(30) Priorität: 12.01.2023 EP 23151409
(43) Veröffentlichungstag der Anmeldung: 15.10.2025
(73) Patentinhaber: Siemens Aktiengesellschaft, 80333 München (DE)
(72) Erfinder: MAYER, Lukas Walter, 1190 Wien (AT); GILA, Janos, 2340 Mödling (AT); HOFMANN, Andreas, 1140 Wien (AT); SCHIEFER, Martin, 3100 St. Pölten (AT)
(74) Vertreter: Siemens Patent Attorneys
(86) Internationale Anmeldenummer: PCT/EP2023/087489
(87) Internationale Veröffentlichungsnummer: WO 2024/149607

(56) Entgegenhaltungen:
- WO-A1-2022/257067
- WO-A1-2022/268332
- WO-A1-2022/269072

## Beschreibung

Die Erfindung betrifft ein drahtloses Kommunikationssystem, umfassend einen Sender, einen Empfänger und einen elektronisch steuerbaren Reflektor, wobei der Sender dazu eingerichtet ist, ein Signal in Richtung des Reflektors zu senden, und der Reflektor dazu eingerichtet ist, das Signal zu empfangen und in Richtung des Empfängers zu reflektieren.

Elektronisch steuerbare Reflektoren können vielfältig eingesetzt werden, beispielsweise um eine Signalausleuchtung von einem Sender an durch Hindernisse oder Objekte abgeschatteten Orten zu verbessern.

Dies kann beispielsweise in einer Industriehalle erfolgen, um die Empfangseigenschaften individueller Arbeitsbereiche mit dort eingesetzten Funk-Systemen, also drahtlose Kommunikationssysteme beispielsweise nach dem 5G-Standard, mithilfe eines jeweiligen elektronisch steuerbaren Reflektors zu verbessern, und eine Funk-Verbindung zu schaffen, welche über keine direkte Kommunikation zwischen Sender und Empfänger, also einer abgedeckten Verbindung (engl. "non-line of sight") verfügen
Ein elektronisch intelligent steuerbarer Reflektor kann in seinem Reflexions-Winkel räumlich, individuell sowohl für einen horizontalen Winkel Phi als auch für einen vertikalen Winkel Theta, eingestellt werden.

Der Reflektor kann derart angeordnet werden, sodass ein Sender und ein Empfänger innerhalb eines günstigen Arbeitsbereichs für den Reflektor zur Abdeckung einer Kommunikationstrecke zwischen Sender, Reflektor und Empfänger liegen. Dieser Arbeitsbereich kann näherungsweise durch einen Kegel beschrieben werden, in dessen Kegelspitze der Reflektor angeordnet ist. Typischer liegt der Öffnungswinkel des Kegels bei 90°.

Die Reflexionseigenschaften des Reflektors können über diesen Arbeitsbereich frei eingestellt werden.

Jedoch sind die möglichen Winkeleinstellungen für die Winkel Phi und Theta begrenzt, was die Anwendung eines intelligent und elektronisch steuerbaren Reflektors einschränkt.

In der Veröffentlichung WO 2022/268332 A1 erfolgt über zwei getrennte drahtlose Kanäle eine Kommunikation, wobei der erste Kanal dazu dient, Informationen über die reflektierende Oberfläche zu übermitteln, und über den zweiten Kommunikationskanal eine Kommunikationsverbindung hergestellt wird.

In der Veröffentlichung WO 2022/257067 A1 ist ein System dargestellt, bei welchem Benutzergeräte über ein oder mehrere intelligente Reflektionsgeräte miteinander kommunizieren, wobei die Reflektoren eine Oberfläche aufweisen, die von mindestens einer "Meta"-Schicht bedeckt ist, die mindestens eines der eingehenden oder ausgehenden Signale filtert.

In der Veröffentlichung WO 2022/269072 A1 ist ein drahtloses Kommunikationsszenario beschrieben, bei welchem eine Weitergabe eines drahtlosen Signals variabel über intelligente Reflektoren zu jeweiligen Empfängern erfolgt, wobei das System erkennen kann, über welchen Reflektor das gesendete Signal den Empfänger tatsächlich erreicht hat.

Es ist Aufgabe der Erfindung eine Anordnung eines drahtlosen Kommunikationssystems eingangs genannter Art zu schaffen, welches einen verbesserten Anwendungsbereich beziehungsweise eine verbesserte Funkausleuchtung des drahtlosen Kommunikationssystems im Bereich des Empfängers erlaubt.

Die Aufgabe wird durch ein System eingangs genannter Art gelöst, wobei der Reflektor ferner dazu eingerichtet ist, das Signal innerhalb eines Winkel-Bereichs von einer ersten Grenze zu einer zweiten Grenze mit winkelabhängigen Reflexions-Faktoren zu reflektieren, wobei der Signalpfad des reflektierten Signals, zwischen dem Reflektor und einem Ankunftsort des reflektierten Signals, an der ersten Grenze eine erste Länge aufweist, und der Signalpfad des reflektierten Signals an der zweiten Grenze eine zweite Länge aufweist, und der Signalpfad des reflektierten Signals in der Mitte zwischen der ersten und der zweiten Grenze eine mittlere Länge aufweist, und eine Längendifferenz zwischen der ersten Länge und der zweiten Länge zumindest 20% beträgt, und der Reflektor dazu eingerichtet ist, den winkelabhängigen Reflexions-Faktor an der ersten Grenze gegenüber der mittleren Länge zu vergrößern und winkelabhängigen Reflexions-Faktor an der zweiten Grenze zu verringern.

Der Reflektor weist steuerbare Reflektor-Elemente mit jeweilig einstellbaren Reflexions-Faktoren auf. Durch eine entsprechende Ansteuerung der angeordneten Reflektor-Elemente können die Reflexions-Eigenschaften des Reflektors beispielsweise winkelabhängig eingestellt werden, welche mithilfe einer Antennen-/ Reflektor-Apertur darstellbar ist.

Das reflektierte Signal beleuchtet somit einen Ankunftsort, der durch eine Fläche - wie dem Boden, auf welchem der Empfänger angeordnet ist - gebildet sein kann.

Der Ankunftsort des reflektierten Signals kann auch durch andere Objekte gebildet sein, die eine Wand oder andere Hindernisse.

Für die Konfiguration wird die Geometrie der Anordnung im Raum erfasst und in eine entsprechende Verteilung der Reflexions-Eigenschaften für die steuerbaren Reflektor-Elemente des Reflektors mithilfe mathematischer, geometrischer Operationen umgerechnet.

Es wird dadurch erreicht, dass die Fläche, auf welcher der Empfänger angeordnet ist, gleichmäßiger ausgeleuchtet wird.

Es ist klar, dass die erste Grenze, an welcher der Reflexions-Faktor vergrößert ist, weiter vom Ort des Reflektors entfernt ist, um die Empfangsfeldstärke dementsprechend zu verbessern, als die zweite Grenze, an welcher der Reflexions-Faktor verringert ist, um die Empfangsfeldstärke dementsprechend zu reduzieren, und insgesamt eine verbesserte Verteilung der Empfangsfeldstärke über die gesamte Empfangsfläche, auf welcher der Empfänger angeordnet ist, zu erhalten.

Der jeweilige Reflexions-Faktor kann am Reflektor über ein jeweiliges Reflektor-Element eingestellt werden, wodurch winkelabhängig eine Reflektor-Charakteristik erzielt wird.

In einer Weiterbildung der Erfindung ist es vorgesehen, dass die Längendifferenz zumindest 30% und bevorzugt zumindest 50% beträgt.

In einer Weiterbildung der Erfindung ist es vorgesehen, dass das System in einem Raum angeordnet ist.

In einer Weiterbildung der Erfindung ist es vorgesehen, dass eine gedachte Sichtlinie mit einer Sichtlinien-Länge zwischen dem Sender und dem Empfänger gebildet ist, und eine Übertragungsstrecke zwischen dem Sender (TRX1), dem steuerbaren Reflektor (RIS2) und dem Empfänger (TRX2) gebildet ist, und ein gedachtes Dreieck aus einer ersten Teil-Länge der Übertragungsstrecke, welche zwischen dem Sender und dem Reflektor gelegen ist, einer zweiten Teil-Länge der Übertragungsstrecke, welche zwischen dem Reflektor und dem Empfänger gelegen ist, und der Sichtlinien-Länge einen stumpfen Winkel am Empfänger aufweist.

Die Aufgabe wird auch durch ein System eingangs genannter Art gelöst, wobei der Reflektor ferner dazu eingerichtet ist, das Signal innerhalb eines Winkel-Bereichs von einer ersten Grenze zu einer zweiten Grenze mit winkelabhängigen Reflexions-Faktoren zu reflektieren, wobei der Signalpfad des reflektierten Signals an der ersten Grenze eine erste Länge aufweist, und der Signalpfad des reflektierten Signals an der zweiten Grenze eine zweite Länge aufweist, und der Signalpfad des reflektierten Signals in der Mitte zwischen der ersten und der zweiten Grenze eine mittlere Länge aufweist, und eine gedachte Sichtlinie mit einer Sichtlinien-Länge zwischen dem Sender und dem Empfänger gebildet ist, und eine Übertragungsstrecke zwischen dem Sender, dem steuerbaren Reflektor und dem Empfänger gebildet ist, und eine Übertragungsstrecke zwischen dem Sender, dem steuerbaren Reflektor und dem Empfänger gebildet ist, und ein gedachtes Dreieck aus einer ersten Teil-Länge der Übertragungsstrecke, welche zwischen dem Sender und dem Reflektor gelegen ist, einer zweiten Teil-Länge der Übertragungsstrecke, welche zwischen dem Reflektor und dem Empfänger gelegen ist, und der Sichtlinien-Länge einen stumpfen Winkel am Empfänger aufweist, und der Reflektor dazu eingerichtet ist, den winkelabhängigen Reflexions-Faktor an der ersten Grenze gegenüber der mittleren Länge zu vergrößern und winkelabhängigen Reflexions-Faktor an der zweiten Grenze zu verringern.

Die Erfindung wird nachfolgend anhand eines in den beigeschlossenen Zeichnungen dargestellten Ausführungsbeispiels näher erläutert.

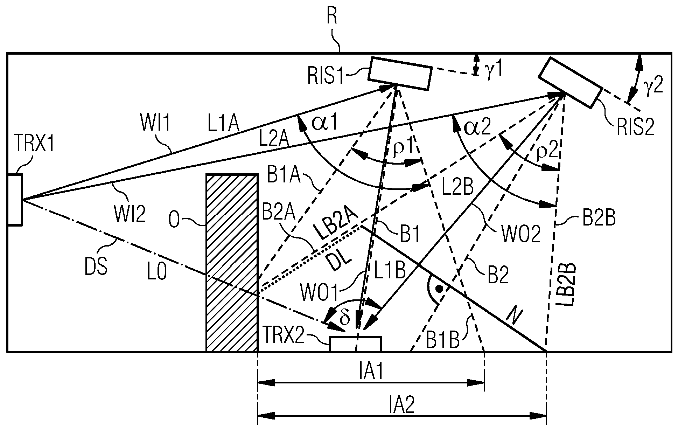

Die Figur zeigt ein erstes Ausführungsbeispiel der Erfindung.

Zunächst ist ein drahtloses Kommunikationssystem nach dem Stand der Technik gezeigt, welches einen Sender TRX1, einen Empfänger TRX2 und einen elektronisch steuerbaren Reflektor RIS1 umfasst.

Ein Signal WI1 kann vom Sender TRX1 zu einem Reflektor RIS1 gesendet werden und weiter als Signal WO1 zu einem Empfänger TRX2 reflektiert werden, wobei das Signal Längen L1A und L1B zurücklegt.

Der Reflektor weist einen steuerbaren Bereich ρ1 auf.

Durch die Anordnung von Sender TRX1, Reflektor RIS1 und Empfänger TRX2 wird gemeinsam mit einem Montagewinkel γ1 des Reflektors ein effektiver Winkelbereich α1 für den Reflektor RIS1 gebildet.

Der Empfänger TRX2 kann innerhalb einer ausgeleuchteten Fläche IA1 angeordnet sein, in welcher mithilfe des Reflektors RIS1 ein Empfang des vom Sender TRX1 gesendeten Signals erfolgen kann.

Es ist ferner ein erfindungsgemäßes drahtloses Kommunikationssystem gezeigt, welches einen Sender TRX1, einen Empfänger TRX2 und einen elektronisch steuerbaren Reflektor RIS2 umfasst und in einem Raum R angeordnet ist.

Der Sender TRX1 ist dazu eingerichtet, ein Signal WI2 in Richtung des Reflektors RIS2 zu senden.

Der intelligente, elektronisch steuerbare Reflektor RIS2 ist dazu eingerichtet, das Signal vom Sender TRX1 zu empfangen und weiter als Signal WO2 in Richtung des Empfängers TRX2 zu reflektieren.

Der Signalpfad B1 des reflektierten Signals in der Mitte zwischen der ersten und der zweiten Grenze B1A, B1B des ersten Reflektors RIS1 weist eine mittlere Länge auf.

Der Reflektor RIS2 weist einen steuerbaren Bereich ρ2 auf, welcher dem steuerbaren Bereich ρ1 des Reflektors RIS1 entsprechen kann.

Durch die Anordnung von Sender TRX1, Reflektor RIS2 und Empfänger TRX2 wird gemeinsam mit einem Montagewinkel γ2 des Reflektors, gemessen gegenüber der Horizontalen des Raums R, ein effektiver Winkelbereich α2 für den Reflektor RIS2 gebildet.

Es ist in der Figur erkennbar, dass der effektive Winkelbereich α2 für den Reflektor RIS2 deutlich über dem effektiven Winkelbereich α1 für den Reflektor RIS1 liegt.

Umgekehrt kann somit der effektive Winkelbereich für den Reflektor RIS2 kleiner eingestellt werden, sodass eine ausgeleuchtete Fläche IA2 beispielsweise der gezeigten Fläche IA1 entspricht, was vorteilhaft ist, um eine günstige Apertur zu bestimmen und einzustellen, beziehungsweise der gesamte Aufbau des Reflektor RIS2 und dessen Ansteuerung einfacher erfolgen und kostengünstiger kann.

Daher ist die ausgeleuchtete Fläche IA2 durch den Reflektor RIS2 größer als die ausgeleuchtete Fläche IA1 durch den Reflektor RIS1.

Unter einer ausgeleuchteten Fläche kann ein Ankunftsort des vom Sender TRX1 gesendeten und vom steuerbaren Reflektor RIS2 reflektierten Signals verstanden werden.

Der Ankunftsort umfasst beispielsweise die ausgeleuchteten Flächen IA1 und IA2, und kann ferner auf Hindernisse, wie der Wand O im Raum R gelegen sein.

Auf der ausgeleuchteten Fläche IA2 am Ankunftsort liegt der Empfänger TRX2.

Es ist klar, dass eine Übertragung auch in umgekehrter Richtung erfolgen kann, wenn bei Sender und Empfänger jeweilige Transceiver-Funktionen vorliegen.

Der Reflektor RIS2 ist ferner dazu eingerichtet, das Signal innerhalb eines Winkel-Bereichs von einer ersten Grenze B2A zu einer zweiten Grenze B2B mit winkelabhängigen Reflexions-Faktoren zu reflektieren.

Der Signalpfad des reflektierten Signals an der ersten Grenze B2A weist eine erste Länge LB2A auf.

Der Signalpfad des reflektierten Signals an der zweiten Grenze B2B weist eine zweite Länge LB2B auf.

Der Signalpfad B2 des reflektierten Signals in der Mitte zwischen der ersten und der zweiten Grenze B2A, B2B des zweiten Reflektors RIS2 weist eine mittlere Länge auf.

Eine Längendifferenz DL zwischen der ersten Länge LB2A und der zweiten Länge LB2B beträgt zumindest 20%, optional zumindest 30% und bevorzugt zumindest 50%.

Die Längendifferenz DL kann beispielsweise gebildet werden, indem eine Normale N auf den Signalpfad B2 des reflektierten Signals in der Mitte zwischen der ersten und der zweiten Grenze B2A, B2B gelegt wird, wobei die Normale N durch den Schnittpunkt der zweiten Grenze B2B und jener Ebene verläuft, welche durch den Empfänger TRX2 gebildet wird, wie der Boden des Raums R.

Jener Anteil auf der Grenze B2A, welcher zwischen dem Schnittpunkt der ersten Grenze B2A und der Normalen N festgelegt wird, sowie jener Ebene, welche durch den Empfänger TRX2 gebildet wird, wie der Boden des Raums R, oder auch durch einen Schnittpunkt mit einem Hindernis-Objekt O, kann als Längendifferenz DL festgelegt werden.

Der Reflektor RIS2 ist außerdem dazu eingerichtet, den Reflexions-Faktor winkelabhängig an der ersten Grenze B2A gegenüber der mittleren Länge LB2 zu vergrößern und den Reflexions-Faktor winkelabhängig an der zweiten Grenze B2B zu verringern.

Alternativ oder zusätzlich kann eine gedachte Sichtlinie DS mit einer Länge der Sichtlinien L0 zwischen dem Sender TRX1 und dem Empfänger TRX2 gebildet sein.

Es ist ferner eine Übertragungsstrecke für eine Datenübertragung zwischen dem Sender TRX1, dem steuerbaren Reflektor RIS2 und dem Empfänger TRX2 gebildet.

Ferner kann ein gedachtes Dreieck aus der ersten Teil-Länge L2A der Übertragungsstrecke, welche zwischen dem Sender und dem Reflektor gelegen ist, der zweiten Teil-Länge L2B der Übertragungsstrecke, welche zwischen dem Reflektor und dem Empfänger gelegen ist, und der Sichtlinien-Länge L0 einen stumpfen Winkel δ am Empfänger TRX2 aufweisen.

Der Empfänger TRX2 kann innerhalb einer ausgeleuchteten Fläche IA2 angeordnet sein, in welcher mithilfe des Reflektors RIS2 ein Empfang des vom Sender TRX1 gesendeten Signals erfolgen kann.

Die zu überwindenden Strecken der Funk-Wellen WI1 und WO1, welche dem Reflektor RIS1 zugeordnet sind, sind im Vergleich zu den Strecken der Funk-Wellen WI2 und WO2, welche dem Reflektor RIS2 zuzuordnen sind, kürzer.

Dieser Vorteil ist jedoch gering, und wird durch die besseren effektiven Reflexionseigenschaften des Reflektors RIS2 an dessen Position überwunden, so dass für den ausgeleuchteten Bereich IA2 eine bessere Funkübertragung erzielt werden kann.

Eine Konfiguration des steuerbaren Reflektors RIS2 kann in einer Konfigurations-Vorrichtung erfolgen, welche ferner vom Kommunikationssystem umfasst ist und einen Prozessor und einen Speicher aufweist (ist in der Figur nicht gezeigt).

### Bezugszeichenliste:

- γ1, γ2: Montagewinkel des intelligenten Reflektors
- ρ1, ρ2: steuerbarer Bereich des intelligenten Reflektors
- B1, B2: Bereichs-Mitte des steuerbaren Bereichs des intelligenten Reflektors
- B1A, B1B, B2A, B2B: Länge an der Begrenzung des steuerbaren Bereichs des intelligenten Reflektors
- DL: Längen-Differenz
- DS: gedachte Sichtlinie durch Hindernis
- IA1, IA2: ausgeleuchtete Fläche
- L1A, L1B, L2A, L2B: Teil-Länge der Übertragungsstrecke
- N: Normale auf Bereichs-Mitte
- O: Hindernis-Objekt
- R: Raum
- RIS1, RIS2: intelligenter Reflektor
- TRX1, TRX2: Transceiver
- WI1, WI2: eingehende Welle
- WO1, WO2: ausgehende Welle
- α1, α2: effektiver Winkelbereich des intelligenten Reflektors
- δ: stumpfer Winkel

## Patentansprüche

1. Drahtloses Kommunikationssystem, umfassend einen Sender (TRX1), einen Empfänger (TRX2) und einen elektronisch steuerbaren Reflektor (RIS2), wobei der Sender (TRX1) dazu eingerichtet ist, ein Signal in Richtung des Reflektors (RIS2) zu senden, und der Reflektor (RIS2) dazu eingerichtet ist, das Signal zu empfangen und in Richtung des Empfängers (TRX2) zu reflektieren, **dadurch gekennzeichnet, dass** der Reflektor (RIS2) ferner dazu eingerichtet ist, das Signal innerhalb eines Winkel-Bereichs von einer ersten Grenze (B2A) zu einer zweiten Grenze (B2B) mit winkelabhängigen Reflexions-Faktoren zu reflektieren, wobei der Signalpfad des reflektierten Signals, zwischen dem Reflektor (RIS2) und einem Ankunftsort des reflektierten Signals, an der ersten Grenze (B2A) eine erste Länge (LB2A) aufweist, und der Signalpfad des reflektierten Signals an der zweiten Grenze (B2B) eine zweite Länge (LB2B) aufweist, und der Signalpfad des reflektierten Signals in der Mitte zwischen der ersten und der zweiten Grenze (B2A, B2B) eine mittlere Länge (LB2) aufweist, und eine Längendifferenz (DL) zwischen der ersten Länge (LB2A) und der zweiten Länge (LB2B) zumindest 20% beträgt, und der Reflektor (RIS2) dazu eingerichtet ist, den winkelabhängigen Reflexions-Faktor an der ersten Grenze (B2A) gegenüber der mittleren Länge (LB2) zu vergrößern und winkelabhängigen Reflexions-Faktor an der zweiten Grenze (B2B) zu verringern.

2. System nach dem vorhergehenden Anspruch, wobei die Längendifferenz (DL) zumindest 30% und bevorzugt zumindest 50% beträgt.

3. System nach einem der vorhergehenden Ansprüche, wobei das System in einem Raum (R) angeordnet ist.

4. System nach einem der vorhergehenden Ansprüche, wobei eine gedachte Sichtlinie (DS) mit einer Sichtlinien-Länge (L0) zwischen dem Sender (TRX1) und dem Empfänger (TRX2) gebildet ist, und eine Übertragungsstrecke zwischen dem Sender (TRX1), dem steuerbaren Reflektor (RIS2) und dem Empfänger (TRX2) gebildet ist, und ein gedachtes Dreieck aus einer ersten Teil-Länge (L2A) der Übertragungsstrecke, welche zwischen dem Sender (TRX1) und dem Reflektor (RIS2) gelegen ist, einer zweiten Teil-Länge (L2B) der Übertragungsstrecke, welche zwischen dem Reflektor (RIS2) und dem Empfänger (TRX2) gelegen ist, und der Sichtlinien-Länge (L0) einen stumpfen Winkel (δ) am Empfänger (TRX2) aufweist.

## Claims

1. Wireless communication system comprising a transmitter (TRX1), a receiver (TRX2) and an electronically controllable reflector (RIS2), wherein the transmitter (TRX1) is configured to transmit a signal in the direction of the reflector (RIS2), and the reflector (RIS2) is configured to receive the signal and reflect it in the direction of the receiver (TRX2), **characterised in that** the reflector (RIS2) is furthermore configured to reflect the signal within an angular range from a first limit (B2A) to a second limit (B2B) with angle-dependent reflection coefficients, wherein, between the reflector (RIS2) and an arrival point of the reflected signal, the signal path of the reflected signal has a first length (LB2A) at the first limit (B2A) and the signal path of the reflected signal has a second length (LB2B) at the second limit (B2B), and the signal path of the reflected signal has a central length (LB2) in the centre between the first and the second limit (B2A, B2B), and a length difference (DL) between the first length (LB2A) and the second length (LB2B) is at least 20%, and the reflector (RIS2) is configured to increase the angle-dependent reflection coefficient at the first limit (B2A) in relation to the central length (LB2) and to decrease the angle-dependent reflection coefficient at the second limit (B2B).

2. System according to the preceding claim, wherein the length difference (DL) is at least 30% and preferably at least 50%.

3. System according to one of the preceding claims, wherein the system is arranged in a room (R).

4. System according to one of the preceding claims, wherein an imaginary line of sight (DS) with a line of sight length (L0) is formed between the transmitter (TRX1) and the receiver (TRX2), and a transmission path is formed between the transmitter (TRX1), the controllable reflector (RIS2) and the receiver (TRX2), and an imaginary triangle consisting of a first partial length (L2A) of the transmission path, which is located between the transmitter (TRX1) and the reflector (RIS2), a second partial length (L2B) of the transmission path, which is located between the reflector (RIS2) and the receiver (TRX2), and the line of sight length (L0) has an obtuse angle (δ) at the receiver (TRX2).

## Revendications

1. Système de communication sans fil, comprenant un émetteur (TRX1), un récepteur (TRX2) et un réflecteur contrôlable électroniquement (RIS2), dans lequel l'émetteur (TRX1) est agencé pour envoyer un signal dans la direction du réflecteur (RIS2), et le réflecteur (RIS2) est agencé pour recevoir le signal et le réfléchir dans la direction du récepteur (TRX2), **caractérisé en ce que** le réflecteur (RIS2) est en outre agencé pour réfléchir le signal dans une plage d'angles allant d'une première limite (B2A) à une deuxième limite (B2B) avec des facteurs de réflexion dépendants de l'angle, dans lequel le trajet du signal réfléchi a, entre le réflecteur (RIS2) et un point d'arrivée du signal réfléchi, une première longueur (LB2A) au niveau de la première limite (B2A), et le trajet du signal réfléchi a une deuxième longueur (LB2B) au niveau de la deuxième limite (B2B), et le trajet de signal du signal réfléchi a une longueur moyenne (LB2) au milieu entre les première et deuxième limites (B2A, B2B), et une différence de longueur (DL) entre la première longueur (LB2A) et la deuxième longueur (LB2B) est d'au moins 20 %, et le réflecteur (RIS2) est agencé pour augmenter le facteur de réflexion dépendant de l'angle au niveau de la première limite (B2A) par rapport à la longueur moyenne (LB2) et pour réduire le facteur de réflexion dépendant de l'angle au niveau de la deuxième limite (B2B).

2. Système selon la revendication précédente, dans lequel la différence de longueur (DL) est d'au moins 30 % et de préférence d'au moins 50 %.

3. Système selon l'une des revendications précédentes, dans lequel le système est disposé dans un local (R).

4. Système selon l'une quelconque des revendications précédentes, dans lequel une ligne de vue imaginaire (DS) avec une longueur de ligne de vue (L0) est formée entre l'émetteur (TRX1) et le récepteur (TRX2), et un trajet de transmission est formé entre l'émetteur (TRX1), le réflecteur contrôlable (RIS2) et le récepteur (TRX2), et un triangle imaginaire formé par une première longueur partielle (L2A) du trajet de transmission situé entre l'émetteur (TRX1) et le réflecteur (RIS2), une deuxième longueur partielle (L2B) du trajet de transmission situé entre le réflecteur (RIS2) et le récepteur (TRX2) et la longueur de la ligne de vue (L0) ayant un angle obtus (δ) au niveau du récepteur (TRX2).
